# EUROPÄISCHE PATENTSCHRIFT

(11) **EP 2 229 577 B1**
(45) Veröffentlichungstag und Bekanntmachung des Hinweises auf die Patenterteilung: **11.04.2012**
(21) Anmeldenummer: 08707002.5
(22) Anmeldetag: 11.01.2008
(51) Int. Cl.: G01F 1/84

(54) **VERFAHREN ZUM BETREIBEN EINES CORIOLIS-MASSENDURCHFLUSSMESSGERÄTS SOWIE CORIOLIS-MASSENDURCHFLUSSMESSGERÄT**
METHOD FOR OPERATING A CORIOLIS MASS FLOW METER AND CORIOLIS MASS FLOW METER
PROCÉDÉ DE FONCTIONNEMENT D'UN DÉBITMÈTRE MASSIQUE À EFFET CORIOLIS ET DÉBITMÈTRE MASSIQUE À EFFET CORIOLIS

(43) Veröffentlichungstag der Anmeldung: 22.09.2010
(73) Patentinhaber: Siemens Aktiengesellschaft, 80333 München (DE)
(72) Erfinder: BIERWEILER, Thomas, 76297 Stutensee (DE); ENS, Wolfgang, 76351 Linkenheim (DE); HENZLER, Helmut, 76307 Karlsbad (DE); LENZ, Henning, 76135 Karlsruhe (DE)
(74) Vertreter: Wolff, Harry
(86) Internationale Anmeldenummer: PCT/EP2008/000177
(87) Internationale Veröffentlichungsnummer: WO 2009/089839

(56) Entgegenhaltungen:
- EP-A- 1 693 654
- EP-A- 1 845 346
- US-A1- 2002 100 505

## Beschreibung

Die Erfindung betrifft ein Verfahren zum Betreiben eines Coriolis-Massendurchflussmessgeräts nach dem Oberbegriff des Anspruchs 1 sowie ein Coriolis-Massendurchflussmessgerät nach dem Oberbegriff des Anspruchs 4.

Coriolis-Massendurchflussmessgeräte weisen im Allgemeinen ein einziges Messrohr oder eine Anzahl, zum Beispiel ein Paar, von Messrohren auf, durch das bzw. die ein Medium strömt, dessen Massendurchfluss bestimmt werden soll. Dabei sind unterschiedliche Anordnungen und Geometrien der Messrohre bekannt. Es gibt zum Beispiel Coriolis-Massendurchflussmessgeräte mit einem einzigen geraden Messrohr sowie Coriolis-Massendurchflussmessgeräte mit zwei gekrümmten, parallel zueinander verlaufenden Messrohren. Letztere, paarweise identisch ausgeführte Messrohre, werden durch eine im mittleren Bereich platzierte Erregeranordnung zur Erzielung eines Massenausgleichs so zum Schwingen angeregt, dass sie gegeneinander schwingen, das heißt, dass die Schwingungen der beiden Messrohre um 180° gegeneinander phasenversetzt sind. Die Lage des Massenmittelpunkts des aus den beiden Messrohren gebildeten Systems bleibt dabei im Wesentlichen konstant und auftretende Kräfte werden weitgehend kompensiert. Das hat als positive Konsequenz, dass das schwingende System kaum nach außen als solches wirksam wird. Vor und hinter der Erregeranordnung werden Schwingungsaufnehmer angebracht, zwischen deren Ausgangssignalen bei einer Strömung eine Phasendifferenz als Messsignal ausgewertet werden kann. Diese wird durch die bei einer Strömung herrschenden Corioliskräfte und damit durch den Massendurchfluss verursacht. Die Dichte des Mediums beeinflusst die Resonanzfrequenz des Schwingungssystems. Damit kann neben dem Massendurchfluss unter anderem auch die Dichte des strömenden Mediums bestimmt werden.

Informationen über Mehrphasenströmungen, wie Zweiphasenströmungen, insbesondere die Erkennung des Auftretens einer solchen Mehrphasenströmung sowie Aussagen über die Ausprägung der Mehrphasenströmung, sind bisher mit Coriolis-Massendurchflussmessgeräten noch nicht sicher gewinnbar. Ein Beispiel für eine Zweiphasenströmung sind Gasblasen in einer Flüssigkeit, die zum Beispiel verursacht sein können durch Kavitation in Ventilen oder Pumpen oder das Ansaugen von Luft an Undichtigkeiten eines Rohrleitungssystems. Ferner ist ein Beispiel für eine Zweiphasenströmung ein Gemisch aus Feststoffen in einer Flüssigkeit, zum Beispiel verursacht durch Kristallisation oder dem plötzlichen Ablösen von Ablagerungen im Rohrleitungssystem, durch das das Medium strömt. Ein weiteres Beispiel sind Gemische nicht lösbarer Flüssigkeiten, also Emulsionen, die zum Beispiel durch einen Wechsel des durch das Rohrleitungssystem strömenden Mediums verursacht sein können. Bei Auftreten von Mehrphasenströmungen liefern Coriolis-Massendurchflussmessgeräte im Allgemeinen fehlerhafte Messwerte des Massendurchflusses. Wünschenswert ist daher die Diagnose dieses Zustands.

Aus der DE 10 2006 017 676 B3 ist ein Verfahren zum Betrieb eines Coriolis-Massendurchflussmessgeräts bekannt, bei welchem mehrere Indikatorgrößen zur Detektion einer Mehrphasenströmung ermittelt werden. Beispielsweise wird zur Bestimmung einer Indikatorgröße ein Frequenzspektrum der von den Schwingungsaufnehmern erfassten Signale analysiert. Abweichungen eines im Betrieb des Coriolis-Massendurchflussmessgeräts ermittelten Spektrums von einem zuvor festgelegten, nominellen Spektrum werden zur Berechnung einer Indikatorgröße zur Detektion einer Mehrphasenströmung genutzt. Zur Berechnung einer zweiten Indikatorgröße wird vorgeschlagen, das Rauschen des einlaufseitigen Schwingungssignals mit dem Rauschen des auslaufseitigen Schwingungssignals zu korrelieren und daraus die Laufzeit der Mehrphasenströmung zwischen den beiden Schwingungsaufnehmern zu bestimmen. Aus der Strömungsgeschwindigkeit des Mediums im Messrohr, die anhand des mit dem Coriolis-Massendurchflussmessgerät in üblicher Weise erfassten Massendurchflusses berechnet wird, und der Geometrie des Messrohrs kann ebenfalls die Laufzeit des Mediums zwischen den beiden Schwingungsaufnehmern bestimmt werden. Durch den Vergleich dieser Laufzeiten wird eine weitere Indikatorgröße bestimmt. Das bekannte Verfahren hat dabei den Nachteil, dass zur Detektion einer Mehrphasenströmung wenigstens zwei Indikatorgrößen zu einem gemeinsamen Wert kombiniert werden müssen, was mit einem vergleichsweise hohen Aufwand verbunden ist.

Der Erfindung liegt die Aufgabe zugrunde, ein Verfahren zum Betreiben eines Coriolis-Massendurchflussmessgeräts sowie ein neues Coriolis-Massendurchflussmessgerät zu schaffen, mit welchen der unerwünschte Zustand einer Mehrphasenströmung deutlicher erkannt werden kann und die somit einen zuverlässigeren Betrieb des Geräts ermöglichen.

Zur Lösung dieser Aufgabe weist das neue Verfahren zum Betreiben eines Coriolis-Massendurchflussmessgeräts der eingangs genannten Art die im kennzeichnenden Teil des Anspruchs 1 angegebenen Merkmale auf. In den abhängigen Ansprüchen sind vorteilhafte Weiterbildungen, in Anspruch 4 ein neues Coriolis-Massendurchflussmessgerät beschrieben.

Die Erfindung hat den Vorteil, dass aufgrund der Berechnung der Differenz zwischen den Schwingungssignalen der beiden in Längsrichtung des Messrohrs voneinander beabstandeten Schwingungsaufnehmer die Phaseninformation bei der spektralen Analyse deutliche Berücksichtigung findet. Diese enthält wichtige Informationen, da sich die Strömung und die Mediendichte zwischen den beiden Schwingungsaufnehmern aufgrund der Mehrphasenströmung, insbesondere aufgrund der in einem Fluid enthaltenen Gasblasen, ändern. Ein weiterer Vorteil der Erfindung ist darin zu sehen, dass als Basis zur Ermittlung der Indikatorgröße lediglich ohnehin im Massendurchflussmessgerät vorhandene Signale verwendet werden. Neben den durch die beiden Schwingungsaufnehmer erfassten Schwingungssignalen werden keine weiteren Signale benötigt. Zudem erfolgt die Erkennung von mitgeführten Gasanteilen in Mehrphasenströmungen weitgehend unabhängig von der Dichte des Mediums. Das Coriolis-Massendurchflussmessgerät kann beispielsweise über einen Feldbus an eine übergeordnete Leitstation in einer automatisierungstechnischen Anlage ein Warnsignal ausgeben, sobald mitgeführtes Gas erkannt wird. Zusätzlich ist anhand der Indikatorgröße eine Abschätzung des Gasanteils möglich. Damit können schnell geeignete Maßnahmen zur Behebung eines eventuellen Fehlerzustands eingeleitet werden.

In einer vorteilhaften Ausgestaltung der Erfindung kann die vorgegebene maximale Ordnung der Oberschwingungen, die zur Ermittelung der Indikatorgröße berücksichtigt werden, zwischen 5 und 15 gewählt werden. Als besonders vorteilhaft hat sich dabei der Wert 10 erwiesen, das heißt es werden lediglich Oberschwingungen der ersten bis zur zehnten Ordnung in die Auswertung einbezogen. Dabei kann eine besonders zuverlässige Beurteilung des Zustands des Mediums erreicht werden, wenn bei der Summenberechnung die spektralen Anteile der Oberschwingungen jeweils mit einem Gewichtungsfaktor multipliziert werden, der gleich dem Quadrat der Ordnungszahl der jeweiligen Oberschwingung ist.

In vorteilhafter Weise wird eine quantitative Abschätzung der einzelnen Phasenanteile in einer Mehrphasenströmung, insbesondere des Gasanteils in einem Fluid, erreicht, indem dieser Anteil quantitativ anhand einer zuvor empirisch ermittelten und abgespeicherten Funktion zur Darstellung des prozentualen Volumenanteils in Abhängigkeit des Verhältnisses des spektralen Anteils der Grundschwingung zur Summe der spektralen Anteile der Oberschwingungen berechnet wird.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: eine Prinzipdarstellung eines Coriolis-Massendurchflussmessgeräts,
- Figur 2: zeitliche Verläufe der Differenz zweier Schwingungssignale,
- Figur 3: Frequenzspektren der Verläufe gemäß Figur 2,
- Figur 4: Zeitverläufe ermittelter Höhen spektraler Anteile und
- Figur 5: ein Diagramm einer Funktion zur Darstellung der Abhängigkeit des Gasanteils eines Fluids von einer Indikatorgröße.

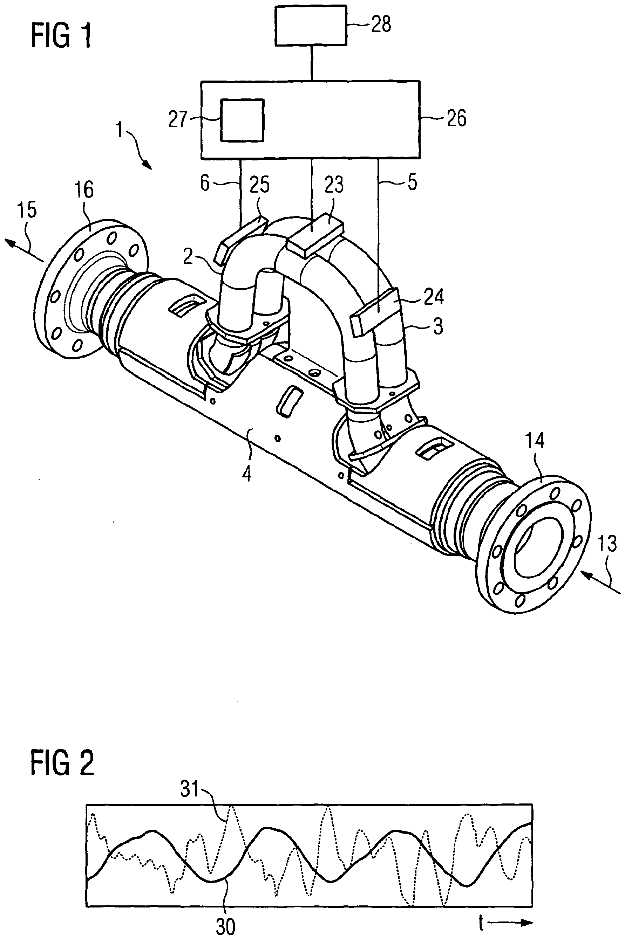

Ein Massendurchflussmessgerät 1 gemäß Figur 1 arbeitet nach dem Coriolisprinzip. Ein erstes Messrohr 2 und ein zweites Messrohr 3 sind im Wesentlichen parallel zueinander angeordnet. Sie werden üblicherweise aus einem Stück durch Biegen angefertigt. Der Verlauf der Messrohre ist im Wesentlichen u-förmig. Ein fließfähiges Medium strömt entsprechend einem Pfeil 13 in das Massendurchflussmessgerät 1 und damit in die beiden hinter einem in der Figur nicht sichtbaren Einlaufsplitter befindlichen Einlaufabschnitte der Messrohre 2 und 3 ein und entsprechend einem Pfeil 15 aus den Auslaufabschnitten und dem dahinter befindlichen,- ebenfalls in der Figur nicht sichtbaren Auslaufsplitter wieder aus. Flansche 14 und 16, die mit dem Einlaufsplitter bzw. dem Auslaufsplitter fest verbunden sind, dienen zur Befestigung des Massendurchflussmessgeräts 1 in einer in der Figur nicht dargestellten Rohrleitung. Durch einen Versteifungsrahmen 4 wird die Geometrie der Messrohre 2 und 3 weitgehend konstant gehalten, so dass auch Veränderungen des Rohrleitungssystems, in welchem das Massendurchflussmessgerät 1 eingebaut ist, beispielsweise aufgrund von Temperaturschwankungen, allenfalls zu einer geringen Nullpunktverschiebung führen. Eine in Figur 1 symbolisch dargestellte Erregeranordnung 23, die beispielsweise aus einer am Messrohr 2 befestigten Magnetspule und einem am Messrohr 3 angebrachten Magneten, der in die Magnetspule eintaucht, bestehen kann, dient zur Erzeugung einander entgegengesetzter Schwingungen der beiden Messrohre 2 und 3, deren Frequenz der Eigenfrequenz des im Wesentlichen u-förmigen Mittenabschnitts der Messrohre 2 und 3 entspricht. Ein Aufnehmer 24 sowie ein Aufnehmer 25, deren Aufbau demjenigen der Erregeranordnung 23 entsprechen kann, dienen zur Erfassung der Corioliskräfte und/oder der auf den Corioliskräften beruhenden Schwingungen der Messrohre 2 und 3, die aufgrund der Masse des durchströmenden Mediums entstehen. Die Phasenverschiebung zwischen den Schwingungssignalen 5 und 6, die durch die beiden Aufnehmer 24 bzw. 25 erzeugt werden, wertet eine Auswerteeinrichtung 26 zur Berechnung eines Messwerts für den Durchfluss aus. Die Auswerteeinrichtung 26 dient gleichzeitig zur Ansteuerung der Erregeranordnung 23.

Abweichend von dem gezeigten Ausführungsbeispiel können die Messrohre 2 und 3 selbstverständlich andere Geometrien aufweisen, beispielsweise einen v-förmig oder einen Ω-förmig ausgebildeten Mittenabschnitt, oder es kann eine abweichende Anzahl und Anordnung von Erregeranordnungen und Aufnehmern gewählt werden. Das Coriolis-Massendurchflussmessgerät kann alternativ eine andere Anzahl von Messrohren, beispielweise ein Messrohr oder mehr als zwei Messrohre, besitzen.

Eine Funktion zur Darstellung der Abhängigkeit der Größe eines Gasanteils in einem Fluid als strömendes Medium von einer Indikatorgröße, die ebenfalls durch die Auswerteeinrichtung 26 berechnet wird, wird bei einer Inbetriebnahme oder zu einem anderen Betriebszeitpunkt empirisch bestimmt und in einen Speicher 27 hinterlegt. Anhand dieser Funktion ermittelt die Auswerteeinrichtung 26 während des Betriebs des Coriolis-Massendurchflussmessgeräts 1 die Größe des jeweiligen Gasanteils. Der Messwert des Massendurchflusses sowie die Größe des Gasanteils werden auf einer Anzeige 28 ausgegeben oder über einen in der Figur nicht dargestellten Feldbus an eine übergeordnete Leitstation übertragen. Bei einem Zustand, in welchem die Größe des Gasanteils einen zulässigen Wert übersteigt, können durch die Leitstation geeignete Maßnahmen zur weiteren Behandlung, beispielsweise eine Anforderung von Wartungspersonal, eingeleitet werden.

Die in der Auswerteeinrichtung 26 durchgeführten Schritte zur Bestimmung der Indikatorgröße zur Detektion einer Mehrphasenströmung und zur Abschätzung der Größe eines Phasenanteils in einer Mehrphasenströmung am Beispiel eines Gasanteils in einem Fluid werden im Folgenden anhand der Figuren 2 bis 5 näher erläutert. Die Diagramme dienen lediglich zur Veranschaulichung des Verfahrens, so dass auf eine Bemaßung der Achsen verzichtet werden kann.

In einem ersten Schritt wird die Differenz der Schwingungssignale 5 und 6 (Figur 1) berechnet. Beispielhafte Verläufe 30 und 31 sind in Figur 2 über der Zeit t, die auf der Abszisse aufgetragen ist, qualitativ dargestellt. Auf der Ordinate ist der Signalpegel aufgetragen. Der Verlauf 30 wurde bei einer Einphasenströmung aufgenommen, das heißt einem Fluid, das keinerlei Gas- oder Feststoffanteile enthält. Das Signal besteht hauptsächlich aus einer Grundschwingung. Die Anteile der Oberschwingungen sind im Vergleich zur Grundschwingung sehr gering. Der Verlauf des Signals 31, der mit einem Gasanteil von 0,7 % Vol. bei einem Massendurchfluss von 10.000 kg/h aufgenommen wurde, hat dagegen einen deutlich erkennbaren Anteil von Oberschwingungen. An den beiden Verläufen 30 und 31 wird deutlich, dass die Phaseninformation aufgrund der Differenzbildung der beiden Schwingungssignale bei der Auswertung besondere Berücksichtigung findet.

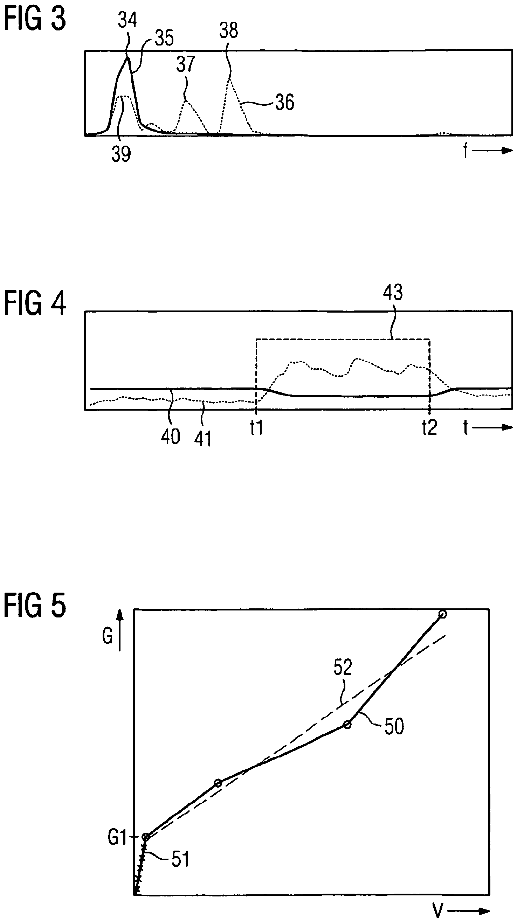

Anhand der in Figur 2 gezeigten Zeitverläufe 30 und 31 werden durch eine Fourier-Transformation, beispielsweise eine Fast-Fourier-Transformation, Verläufe 35 und 36 von Frequenzspektren berechnet, die in Figur 3 als Funktion der Frequenz f, welche an der Abszisse aufgetragen ist, dargestellt sind. Auf der Ordinate ist die Höhe der Spektren aufgetragen. Das Frequenzspektrum mit dem Verlauf 35 zeigt eine ausgeprägte Höhe 34 des Anteils bei der Frequenz einer Grundschwingung, die der Schwingungsfrequenz der Messrohre entspricht. Der Verlauf 35 wurde, wie schon der Zeitverlauf 30, bei einem Medium ohne Gasanteil berechnet. Im Unterschied dazu zeigt der Verlauf 36, der für ein Medium mit Gasanteil berechnet wurde, deutliche spektrale Anteile 37 und 38 der Oberschwingung erster Ordnung bzw. der Oberschwingung zweiter Ordnung. Aus den spektralen Anteilen 37 und 38 sowie den spektralen Anteilen von Oberschwingungen weiterer acht Ordnungen, die jeweils mit dem Quadrat der Ordnungszahl gewichtet werden, wird eine gewichtete Summe berechnet. Eine Höhe 39 des Frequenzanteils der Grundschwingung ist hier vergleichsweise gering. Bereits damit wird deutlich, dass ein Vergleich der Frequenzanteile der Grundschwingung mit den Frequenzanteilen einer oder mehrerer Oberschwingungen eine Mehrphasenströmung indizieren kann.

In Figur 4 sind ein Zeitverlauf 40 fortlaufend berechneter spektraler Anteile einer Grundschwingung und ein Zeitverlauf 41 fortlaufend berechneter Summen der Anteile von Oberschwingungen erster bis zehnter Ordnung, die nach der oben erläuterten Berechnungsvorschrift mit dem Quadrat der jeweiligen Ordnung gewichtet wurden, über der Zeit t gezeichnet. Ein zeitlicher Verlauf 43 eines Gasanteils in einem Fluid zeigt bis zu einem Zeitpunkt t1 einen Gasanteil von 0 % Vol., der bei diesem Zeitpunkt auf einen Gasanteil von 0,7 % Vol. erhöht wird und bei einem Zeitpunkt t2 wieder auf 0 % Vol. zurückgeführt wird. Der Verlauf 40 des spektralen Anteils der Grundschwingung ist gegenüber dem Verlauf 41 der Summe der gewichteten spektralen Anteile der Oberschwingungen um einen Faktor 4 vergrößert dargestellt, um zur Indikation einer Mehrphasenströmung mit besserer Anschaulichkeit einen einfachen Vergleich zwischen den beiden Größen durchführen zu können. An den Verläufen 40 und 41 wird deutlich, dass bereits kurze Zeit nach der Erhöhung des Gasanteils zum Zeitpunkt t1 die Summe der spektralen Anteile der Oberschwingungen entsprechend dem Verlauf 41 größer wird als der spektrale Anteil der Grundschwingung, die der Verlauf 40 zeigt. Eine Mehrphasenströmung wird daher bereits kurz nach ihrem Auftreten detektiert. Entsprechend unterschreitet der Verlauf 41 nach Wegfall des Gasanteils zum Zeitpunkt t2 rasch wieder den Verlauf 40 und es wird wieder ein Zustand festgestellt, der einer Einphasenströmung entspricht. Für die Dauer einer vorherrschenden Mehrphasenströmung liegt der Verlauf 41 deutlich über dem Verlauf 40, so dass durch das Verfahren in besonders zuverlässiger Weise eine Mehrphasenströmung detektierbar ist. Die Verzögerungen bei der Detektion werden vorwiegend durch die Berücksichtigung von vergangenen Abtastwerten bei der Fast-Fourier-Transformation verursacht.

Figur 5 zeigt die Abhängigkeit eines Gasanteils G von einem Verhältnis V. In dem dargestellten Diagramm ist der Gasanteil G auf der Ordinate mit linearer Einteilung und das Verhältnis V auf der Abszisse mit ebenfalls linearer Einteilung aufgetragen. Das Verhältnis V entspricht dem Quotienten aus der Summe der gewichteten spektralen Anteile der Oberschwingungen und dem spektralen Anteil der Grundschwingung. Ein Kurvenverlauf 50 wurde anhand einer Messreihe an einer realen Anlage mit einem konstanten Massendurchfluss von 9.000 kg/h empirisch ermittelt. Er ist annähernd abschnittsweise linear. In einem ersten Bereich, in welchem der Gasanteil unterhalb eines Werts G1 liegt, kann der Verlauf durch eine Gerade 51 mit einer ersten Steigung und in einem zweiten Bereich oberhalb des Werts G1 durch eine Gerade 52 mit einer zweiten Steigung approximiert werden. Der Wert G1 beträgt etwa 1 % Vol.. Anhand der Geraden 51 und 52 und des als Indikatorgröße berechneten Verhältnisses V ist es somit möglich, zuverlässig den Gasanteil zu detektieren und sogar eine quantitative Bestimmung des Gasanteils vorzunehmen. Die Geraden 51 und 52 können anhand des empirisch gemessenen Verlaufs 50 mittels eines Regressionsverfahrens, beispielsweise der Methode der kleinsten Fehlerquadrate, berechnet und im Speicher 27 (Figur 1) als Datensatz oder Kennlinie hinterlegt werden. Damit steht die Kennlinie während des Betriebs des Massendurchflussmessgeräts zur Detektion einer Mehrphasenströmung und/oder zur quantitativen Bestimmung der einzelnen Anteile in der Mehrphasenströmung zur Verfügung.

Alternativ zu dem in Figur 5 gezeigten Beispiel einer abschnittsweise linearen Kurve können selbstverständlich komplexere Modelle, beispielsweise Polynome oder Splines etc., zur Approximation eines empirisch gemessenen Verlaufs angewandt werden. Weiterhin alternativ können zur Berechnung der Approximationskurve nichtlineare Regressionsverfahren, zum Beispiel mit einem parametrierten Modellansatz, eine gitterbasierte Optimierung oder gradientenbasierte, deterministische oder stochastische Optimierungsverfahren erster oder höherer Ordnung etc., zum Einsatz kommen.

In Figur 5 ist lediglich eine Kennlinie für einen konstanten Massendurchfluss dargestellt. Das Verfahren lässt sich in einfacher Weise auf variable Massendurchflüsse erweitern, indem statt der einen Kennlinie eine Kennlinienschar für verschiedene Werte des Massendurchflusses erfasst und abgespeichert wird.

Obwohl in dem gezeigten Ausführungsbeispiel lediglich die Detektion eines Gasanteils in einem fluiden Medium erläutert wurde, ist das Verfahren ebenso zur Detektion inhomogener Mischungen, dispersiver Medien oder von festen Bestandteilen in Flüssigkeiten verwendbar.

## Patentansprüche

1. Verfahren zum Betreiben eines Coriolis-Massendurchflussmessgeräts mit wenigstens einem von einem Medium durchströmten Messrohr (2, 3), das zu Schwingungen angeregt wird, mit wenigstens zwei in Längsrichtung des Messrohrs voneinander beabstandeten Schwingungsaufnehmern (24, 25) zur Erzeugung eines ersten Schwingungssignals (5) bzw. eines zweiten Schwingungssignals (6), wobei zur Detektion einer Mehrphasenströmung eine Indikatorgröße (V) verwendet wird, **dadurch gekennzeichnet, dass** zur Bestimmung der Indikatorgröße (V) ein Differenzsignal (30, 31) des ersten Schwingungssignals (5) und des zweiten Schwingungssignals (6) ermittelt wird, ein Frequenzspektrum (35, 36) des Differenzsignals berechnet wird, die Höhe des spektralen Anteils (39) einer Grundschwingung und der spektralen Anteile (37, 38) einer oder mehrerer Oberschwingungen bis zu einer vorgegebenen maximalen Ordnung der Oberschwingungen im Frequenzspektrum ermittelt wird, die Summe der spektralen Anteile (37, 38) der Oberschwingungen berechnet wird und das Verhältnis (V) des spektralen Anteils (39) der Grundschwingung zur Summe der spektralen Anteile (37, 38) der Oberschwingungen als Indikatorgröße bestimmt wird.

2. Verfahren nach Anspruch 1 **dadurch gekennzeichnet, dass** die vorgegebene maximale Ordnung der Oberschwingungen zwischen 5 und 15, vorzugsweise 10, beträgt und dass bei der Summenberechnung die spektralen Anteile der Oberschwingungen jeweils mit einem Gewichtungsfaktor multipliziert werden, der gleich dem Quadrat der Ordnungszahl der jeweiligen Oberschwingung ist.

3. Verfahren nach Anspruch 1 oder 2, **dadurch gekennzeichnet, dass** ein Gasanteil (G) in einem Medium quantitativ anhand einer zuvor empirisch ermittelten und abgespeicherten Funktion (50) in Abhängigkeit des Verhältnisses (V) berechnet wird.

4. Coriolis-Massendurchflussmessgerät mit wenigstens einem von einem Medium durchströmten Messrohr (2, 3), das zu Schwingungen angeregt wird, mit wenigstens zwei in Längsrichtung des Messrohrs voneinander beabstandeten Schwingungsaufnehmern (24, 25) zur Erzeugung eines ersten Schwingungssignals (5) bzw. eines zweiten Schwingungssignals (6) und mit einer Auswerteeinrichtung (26), **dadurch gekennzeichnet, dass** die Auswerteeinrichtung dazu ausgebildet ist, zur Bestimmung einer Indikatorgröße (V) zur Detektion einer Mehrphasenströmung ein Differenzsignal des ersten Schwingungssignals (5) und des zweiten Schwingungssignals (6) zu ermitteln, ein Frequenzspektrum (35, 36) des Differenzsignals zu berechnen, die Höhe des spektralen Anteils (39) einer Grundschwingung und der spektralen Anteile (37, 38) einer oder mehrerer Oberschwingungen bis zu einer vorgegebenen maximalen Ordnung der Oberschwingungen im Frequenzspektrum zu ermitteln, die Summe der spektralen Anteile der Oberschwingungen zu berechnen und das Verhältnis (V) des spektralen Anteils der Grundschwingung zur Summe der spektralen Anteile der Oberschwingungen als Indikatorgröße zu bestimmen.

## Claims

1. Method for operating a Coriolis mass flowmeter having at least one measurement tube (2, 3), through which a medium flows and which is caused to oscillate, having at least two oscillation pick-ups (24, 25), which are at a distance from one another in the longitudinal direction of the measurement tube, for producing a first oscillation signal (5) and a second oscillation signal (6), respectively, wherein an indicator variable (V) is used for detection of a multi-phase flow, **characterized in that**, in order to determine the indicator variable (V), a difference signal (30, 31) is determined between the first oscillation signal (5) and the second oscillation signal (6), a frequency spectrum (35, 36) of the difference signal is calculated, the level of the spectral component (39) of a fundamental and of the spectral components (37, 38) of one or more harmonics up to a predetermined maximum order of the harmonics in the frequency spectrum is determined, the sum of the spectral components (37, 38) of the harmonics is calculated, and the ratio (V) of the spectral component (39) of the fundamental to the sum of the spectral components (37, 38) of the harmonics is determined as the indicator variable.

2. Method according to Claim 1, **characterized in that** the predetermined maximum order of the harmonics is between 5 and 15, preferably 10, and **in that**, in the sum calculation, the spectral components of the harmonics are each multiplied by a weighting factor, which is equal to the square of the order number of the respective harmonic.

3. Method according to Claim 1 or 2, **characterized in that** a gas component (G) in a medium is calculated quantitatively as a function of the ratio (V), on the basis of a previously empirically determined and stored function (50).

4. Coriolis mass flow meter having at least one measurement tube (2, 3) through which a medium flows and which is caused to oscillate, having at least two oscillation pick-ups (24, 25), which are at a distance from one another in the longitudinal direction of the measurement tube, for producing a first oscillation signal (5) and a second oscillation signal (6) respectively, and having an evaluation device (26), **characterized in that** the evaluation device is designed, in order to determine an indicator variable (V) for detection of a multi-phase flow, to determine a difference signal between the first oscillation signal (5) and the second oscillation signal (6), to calculate a frequency spectrum (35, 36) of the difference signal, to determine the level of the spectral component (39) of a fundamental and of the spectral components (37, 38) of one or more harmonics up to a predetermined maximum order of the harmonics in the frequency spectrum, to calculate the sum of the spectral components of the harmonics, and to determine the ratio (V) of the spectral component of the fundamental to the sum of the spectral components of the harmonics as the indicator variable.

## Revendications

1. Procédé pour faire fonctionner un débitmètre massique à effet Coriolis, comprenant au moins un tube ( 2, 3 ) de mesure, dans lequel passe un fluide, qui est excité en oscillations, comprenant au moins deux enregistreurs ( 24, 25 ) d'oscillation, à distance l'un de l'autre dans la direction longitudinale du tube de mesure, pour la production d'un premier signal ( 5 ) d'oscillation et d'un deuxième signal ( 6 ) d'oscillation, dans lequel on utilise une grandeur ( V ) indicatrice pour la détection d'un courant polyphasé, **caractérisé en ce que**, pour la détermination de la grandeur ( V ) indicatrice, on détermine un signal ( 30, 31 ) de différence entre le premier signal ( 5 ) d'oscillation et le deuxième signal ( 6 ) d'oscillation, on calcule un spectre ( 35, 36 ) de fréquence du signal de différence, on détermine la hauteur de la partie ( 39 ) spectrale d'une oscillation fondamentale des parties ( 37, 38 ) spectrales d'un ou de plusieurs harmoniques jusqu'à un ordre maximum prescrit des harmoniques dans le spectre de fréquence, on calcule la somme des parties ( 37, 38 ) spectrales des harmoniques et on détermine, en tant que grandeur indicatrice, le rapport ( V ) de la partie ( 39 ) spectrale de l'oscillation fondamentale à la somme des parties ( 37, 38 ) spectrales des harmoniques.

2. Procédé suivant la revendication 1, **caractérisé en ce que** l'ordre maximum prescrit des harmoniques est compris entre 5 et 15, en étant de préférence de 10, et **en ce que**, lors du calcul de la somme, on multiplie les parties spectrales des harmoniques respectivement par un facteur de pondération, qui est égal au carré de l'ordinal de l'harmonique respectif.

3. Procédé suivant la revendication 1 ou 2, **caractérisé en ce qu'**on calcule au moyen du rapport ( V ) une proportion ( G ) de gaz dans un fluide quantitativement au moyen d'une fonction ( 50 ) déterminée empiriquement à l'avance et mémorisée.

4. Débitmètre massique à effet Coriolis comprenant au moins un tube ( 2, 3 ) de mesure, dans lequel passe un fluide, qui est excité en oscillations, comprenant au moins deux enregistreurs ( 24, 25 ) d'oscillation, à distance ( 20 ) de l'autre dans la direction longitudinale du tube de mesure, pour la production d'un premier signal ( 5 ) d'oscillation et d'un deuxième signal ( 6 ) d'oscillation et comprenant un dispositif ( 26 ) d'exploitation constitué pour définir, pour la détermination d'une grandeur ( V ) indicatrice pour la détection d'un courant polyphasé, un signal de différence du entre le premier signal ( 5 ) d'oscillation et le deuxième signal ( 6 ) d'oscillation pour calculer un spectre ( 35, 36 ) de fréquence du signal de différence, pour déterminer la hauteur de la partie ( 39 ) spectrale d'une oscillation fondamentale et des parties ( 37, 38 ) spectrales d'un ou de plusieurs harmoniques jusqu'à un ordre maximum prescrit des harmoniques dans le spectre de fréquence, pour calculer la somme des parties spectrale des harmoniques et pour déterminer le rapport ( V ) de la partie spectrale de l'oscillation fondamentale à la somme des parties spectrale des harmoniques comme grandeur indicatrice.
